# EUROPÄISCHE PATENTSCHRIFT

(11) **EP 4 134 702 B1**
(45) Veröffentlichungstag und Bekanntmachung des Hinweises auf die Patenterteilung: **26.07.2023**
(21) Anmeldenummer: 22185910.1
(22) Anmeldetag: 20.07.2022
(51) Int. Cl.: G01S 7/481, G01S 17/89, G01S 17/10

(54) **STRAHLTEILERANORDNUNG FÜR EINEN OPTOELEKTRONISCHEN SENSOR, OPTOELEKTRONISCHER SENSOR MIT EINER SOLCHEN UND VERFAHREN ZUR STRAHLTEILUNG IN EINEM OPTOELEKTRONISCHEN SENSOR**
BEAM SPLITTER ARRANGEMENT FOR AN OPTOELECTRONIC SENSOR, OPTOELECTRONIC SENSOR COMPRISING SUCH A DEVICE AND METHOD FOR BEAM SPLITTING IN AN OPTOELECTRONIC SENSOR
DISPOSITIF DIVISEUR DE FAISCEAU POUR UN CAPTEUR OPTOÉLECTRONIQUE, CAPTEUR OPTOÉLECTRONIQUE DOTÉ D'UN TEL DISPOSITIF ET PROCÉDÉ DE DIVISION DE FAISCEAU DANS UN CAPTEUR OPTOÉLECTRONIQUE

(30) Priorität: 09.08.2021 DE 102021120698
(43) Veröffentlichungstag der Anmeldung: 15.02.2023
(73) Patentinhaber: SICK AG, 79183 Waldkirch (DE)
(72) Erfinder: Baldischweiler, Boris, 79194 Gundelfingen (DE); Menzel, Christoph, 79211 Denzlingen (DE)

(56) Entgegenhaltungen:
- JP-A- 2018 185 196
- US-A1- 2018 052 378
- US-A1- 2020 174 339
- HUGHES S ET AL: "Ultrashort pulse compression in a semiconductor optical amplifier", TECHNICAL DIGEST / CLEO/PACIFIC RIM 2001, THE 4TH PACIFIC RIM CONFERENCE ON LASERS AND ELECTRO-OPTICS, IEEE SERVICE CENTER, PISCATAWAY, NJ, US, Bd. 2, 15. Juli 2001 (2001-07-15), Seiten 500-501, XP010567406, ISBN: 978-0-7803-6738-8

## Beschreibung

Die Erfindung betrifft eine Strahlteileranordnung für einen optoelektronischen Sensor, einen optoelektronischen Sensor mit einer Strahlteileranordnung sowie ein Verfahren zur Strahlteilung in einem optoelektronischen Sensor nach dem Oberbegriff der Ansprüche 1, 11 und 13.

Viele optoelektronische Sensoren arbeiten nach dem Tastprinzip, bei dem ein Lichtstrahl in den Überwachungsbereich ausgesandt und der von einem Objekt zurückgeworfene Lichtstrahl wieder empfangen wird, um dann das Empfangssignal elektronisch auszuwerten. Dabei wird oft die Lichtlaufzeit mit einem bekannten Phasen- oder Pulsverfahren gemessen, um den Abstand eines angetasteten Objekts zu bestimmen. Dieses Verfahren wird auch LIDAR (Light Detection And Ranging) genannt. JP 2018 185196 A offenbart ein Laserradar mit Pulskompression.

Um den Messbereich zu erweitern, kann einerseits der Abtaststrahl bewegt werden, wie dies in einem Laserscanner geschieht. Dort überstreicht ein von einem Laser erzeugter Lichtstrahl mit Hilfe einer Ablenkeinheit periodisch den Überwachungsbereich. Zusätzlich zu der gemessenen Abstandinformation wird aus der Winkelstellung der Ablenkeinheit auf die Winkellage des Objektes geschlossen, und damit ist der Ort eines Objektes in dem Überwachungsbereich in zweidimensionalen Polarkoordinaten erfasst.

Eine andere Möglichkeit zur Messbereichserweiterung besteht darin, zugleich mehrere Messpunkte mit mehreren Abtaststrahlen zu erfassen. Das lässt sich auch mit einem Laserscanner kombinieren, der dann nicht nur eine Überwachungsebene erfasst, sondern über eine Vielzahl von Überwachungsebenen einen dreidimensionalen Raumbereich.

Aus der EP 1 927 867 B1 ist ein optoelektronischer Mehrebenensensor für die Überwachung eines dreidimensionalen Raumbereichs bekannt. Der Sensor weist mehrere zueinander beabstandete Bildsensoren auf. Jedem Bildsensor kann eine Lichtquelle zugeordnet sein und mit deren Hilfe eine Entfernung über eine Pulslaufzeit oder ein Phasenverfahren bestimmt werden. Der Mehrebenensensor ist im Grunde als Vervielfachung einzelner Ebenensensoren aufgebaut und dadurch relativ sperrig.

In den meisten Laserscannern wird die Abtastbewegung durch einen Drehspiegel erreicht. Gerade bei Verwendung mehrerer Abtaststrahlen ist aber im Stand der Technik auch bekannt, stattdessen den gesamten Messkopf mit Lichtquellen und Lichtempfängern rotieren zu lassen, wie dies beispielsweise in DE 197 57 849 B4 beschrieben ist.

In allen beschriebenen Fällen der Mehrfachabtastung bedarf es einer Lichtquelle, die mehrere Lichtstrahlen mit ausreichender Leistung und Strahlqualität erzeugt. Die bekannten Lösungen, in denen lediglich einstrahlige Sendemodule vervielfältigt werden, sind jedoch zu aufwändig.

Die DE 10 2004 014 041 A1 offenbart ein Sensorsystem zur Hinderniserkennung, in dem ein Sensorkopf um seine Achse rotiert. In dem Sensorkopf befindet sich eine Laserzeile mit mehreren Einzellasern, die über eine Optik auf die Umgebung abgebildet wird.

Die angegebenen Vorrichtungen benutzen zum Abtasten eines ausgedehnten Überwachungsbereichs entweder eine Vielzahl von Lichtquellen oder eine Lichtquelle, deren Lichtstrahl den Überwachungsbereich durch Bewegung der Lichtquelle selbst oder mit Hilfe beweglicher Optiken wie beispielswiese rotierender Spiegel, abtastet. Die Verwendung mehrerer Lichtquellen bedeutet in der Regel einen erhöhten Platzbedarf für den Sensor. Bewegliche optische Anordnungen können beispielsweise anfällig gegenüber Erschütterungen sein, was nachteilig bei einer Verwendung im mobilen Einsatz in Fahrzeugen sein kann.

Eine Möglichkeit zur Strahlablenkung ohne bewegliche Anordnungen ist beispielsweise die Verwendung sogenannter "Optical Phased Arrays" (OPA), wie sie beispielsweise in der DE 10 2017 222 864 A1 oder der US 2016 139 266 A1 beschrieben sind. Ein deutscher Fachbegriff für "Optical Phased Arrays" hat sich noch nicht herausgebildet. Neben den oben genannten Anwendungen zur Strahlablenkung beziehungsweise Strahlsteuerung werden Optical Phased Arrays beispielsweise für optische Freistrahl-Kommunikation Anwendungen genutzt.

Die Grundlagen von Phased-Arrays sind aus der Radar Technik, in der mehrere Antennen in unterschiedlichen Phasenlagen angesteuert werden, bekannt. Durch die Überlagerung der elektromagnetischen Wellen der Einzelantennen ergibt sich eine starke Richtwirkung des Gesamtwellenfeldes, welches je nach Ansteuerung der Antennen geschwenkt werden kann. Beim Optical Phased Array werden optische Wellenleiter, in denen das Sendelicht geführt wird, als Antennenzuleitung verwendet. Die Antennen werden entsprechend durch den Wellenleiterausgängen zugeordnete optische Abstrahlelemente gebildet, wobei den Abstrahlelementen jeweils phasenschiebende Elemente vorgeschaltet sind.

Die Phased-Array-Technik erfordert eine kohärente Überlagerung des aus den Abstrahlelementen ausgesandten Sendelichts, so dass die Abstrahlelemente eine gemeinsame Lichtquelle benötigen. Das von der gemeinsamen Lichtquelle ausgesandte Sendelicht wird in der Regel in einer Strahlteileranordnung auf die verschiedenen Abstrahlelemente beziehungsweise die vorgeschalteten Phasenschieber verteilt. Der Eingang der Strahlteileranordnung begrenzt dabei in der Regel die Leistungsdichte der einzukoppelnden Sendelichtpulse.

Die Umsetzung der Strahlteileranordnung erfolgt üblicherweise in Form von integrierten optischen Schaltkreisen, die beispielsweise als "Silicon-on-lnsulator" (SOI) Struktur ausgeführt sind. Hierbei kommen unterschiedliche Materialsysteme zum Einsatz, die jeweils über unterschiedliche maximale Leistungsdichten verfügen, die beispielsweise abhängig von Brechungsindex, Modenfelddurchmesser, Fundamentalmode (Single Mode Wellenleiter) sowie Bandlücken (Absorptionskante) sein können. Die Lichtleitung erfolgt im Transparenzbereich, also entfernt der Absorptionskante. Durch die Dimensionen der Wellenleiter und Modenfelddurchmesser werden aber bereits bei geringen Sendelichtleistungen (beispielsweise 100mW für einen Silicon-on-Insulator-Wellenleiter) Leistungsdichten erreicht, die Zweiphotonenabsorption oder andere nichtlineare Prozesse relevant werden lassen. Besonders kritisch ist hier Zweiphotonenabsorption, da diese zu freien Ladungsträgern und damit starker linearer Absorption führt, mit Folge der Materialzerstörung. Kritisch sind hier die Spitzen-Leistungen bei gepulstem Sendelicht, wobei auch lange Pulspausenverhältnisse keinen Vorteil bringen.

Die Strahlteileranordnung wird üblicherweise durch in mehreren Ebenen kaskadiert angeordnete "1 auf 2"-Strahlteiler realisiert, so dass nach jeder Ebene der Strahlteileranordnung die Leistungsdichte halbiert ist. Das Problem der maximalen Leistungsdichten ist bekannt, sodass im Stand der Technik eine Nachverstärkung der Lichtleistung hinter oder in der Strahlteileranordnung mittels sogenannter Semiconductor Optical Amplifier (SOA) vorgeschlagen wird. Diese Verstärker sind jedoch aktive Bauteile, benötigen eine Energieversorgung und erzeugen thermische Verluste. Sie müssen in allen Zweigen der Strahlteileranordnung die gleiche Verstärkung aufweisen und die Phasenbeziehung zwischen den einzelnen Teilstrahlen zwingend erhalten.

Es ist bekannt, Strahlteileranordnungen in Materialien mit größerer Bandlücke oder kleineren Brechungsindexunterschieden und damit größeren Modenfelddurchmessern zu realisieren (beispielsweise durch Verwendung von SiN oder Si3N4-Strukturen anstelle von SOI-Strukturen) und anschließend die Kopplung der Ausgänge der Strahlteileranordnung in für Optical Phased Arrays vorteilhafte integrierte optische Schaltkreise auf Basis von "Silicon-on-lnsulator" (SOI) Strukturen durchzuführen. Nachteilig bei einer solchen technischen Umsetzung sind Kopplungsverluste an der Kopplungsstelle zwischen Strahlteileranordnung und Optical Phased Array sowie Verwendung unterschiedlicher Materialsysteme.

Da die Leistung von Sendelichtpulsen in auf Silicon-on-Insulator Strukturen basierenden Strahlteilern ohne weitere Maßnahmen auf 100mW begrenzt ist, finden Optical Phased Arrays bisher nur in Verbindung mit Dauerstrich-Lichtquellen (continuous wave, CW) Verwendung. So ist beispielsweise die Realisierung eines optoelektronischen Sensors, der nach einem direkten Puls-Laufzeit-Verfahren (direct Time of Flight, dToF) arbeitet, mit Optical Phased Arrays durch diese Leistungsgrenze bisher nicht praktikabel. Um die Vorteile eines dToF-Verfahrens nutzen zu können, sind Pulse mit Spitzenleistungen notwendig, die aufgrund der Leistungsdichtebegrenzung am Eingang einer auf Silicon-on-Insulator Strukturen basierenden Strahlteileranordnung bisher nicht realisierbar sind.

Es ist daher Aufgabe der Erfindung, eine verbesserte Strahlteileranordnung, insbesondere für einen optoelektronischen Sensor anzugeben.

Diese Aufgabe wird durch eine Strahlteileranordnung für einen optoelektronischen Sensor, einen optoelektronischen Sensor mit einer derartigen Strahlteileranordnung sowie ein Verfahren zur Strahlteilung in einem optoelektronischen Sensor nach den Ansprüchen 1, 11 und 13 gelöst.

Die Erfindung geht von dem Grundgedanken aus, die Leistungsdichte von ersten Sendelichtpulsen eines ersten Sendelichtstrahls durch kontrollierte Pulsverbreiterung derart zu reduzieren, dass eine zerstörungsfreie Einkopplung in eine Strahlteileranordnung ermöglicht wird, und durch anschließende Pulskompression in und/oder nach der Strahlteileranordnung eine Vielzahl von zweiten Sendelichtstrahlen mit bereit zu stellen, wobei eine Pulslänge der zweiten Sendelichtpulse kürzer ist als die Pulslänge der ersten Sendelichtpulse des in die Strahlteileranordnung eingekoppelten ersten Sendelichtstrahls.

Mittels der Erfindung können die Eingangspulsleistungen und damit auch die Ausgangspulsleistungen einer Strahlteileranordnung, insbesondere bei Verwendung in einem Optical Phased Array, deutlich gesteigert werden.

Der erfindungsgemäßen Vorrichtung und dem erfindungsgemäßen Verfahren liegt dabei das aus der Lasertechnik bekannte, aber bisher nicht im Zusammenhang mit Strahlteileranordnungen für optoelektronische Sensoren stehende Verfahren der sogenannten Chirped Pulse Amplification (CPA) zu Grunde. Die Chirped Pulse Amplification wird beispielsweise zum Erzeugen ultrakurzer Laserpulse im Femtosekundenbereich verwendet, wobei ein beugungs- beziehungswiese bandbreitenbegrenzter Ausgangspuls zunächst verbreitert, anschließend verstärkt und dann wieder komprimiert wird. Die Pulsverbreiterung wird dabei genutzt, um die Leistungsdichten im verstärkenden Medium zu reduzieren.

Die Verbreiterung des Pulses im Zeitraum erfolgt durch Aufprägen einer parabolischen Phase im Frequenzraum - ein natürlich stattfindender Prozess bei Lichtausbreitung in dispersiven Medien, in denen der Brechungsindex von der Frequenz beziehungsweise Wellenlänge des Lichts abhängt. Man unterscheidet dabei zwischen der im Allgemeinen schwachen Materialdispersion (Brechungsindex des Materials) und der geometrischen oder Wellenleiterdispersion (effektiver Index der Wellenleitermoden) in Wellenleitern, die im Allgemeinen viel stärker ausgeprägt ist und bezüglich der für die Pulsverbreiterung und/oder -kompression verantwortlichen Gruppengeschwindigkeitsdispersion (group velocity dispersion, GVD) sowohl positiv als auch negativ sein kann - wichtig für Kompression und Verbreiterung. Man spricht bei dieser Pulsverbreiterung gegenüber dem bandbreitenbegrenzten Puls vom Chirp (Zwitschern) des Pulses, da die niederfrequenten (roten) Anteile des Pulses voraneilen, während die hochfrequenten (blauen) Anteile verzögert werden (oder umgekehrt, je nach Vorzeichen der Dispersion). Durch die Verlängerung des Pulses wird die Leistungsdichte des Pulses entsprechend gesenkt. Unter Verwendung eines Mediums mit entgegengesetzter Gruppengeschwindigkeitsdispersion kann der Puls wieder komprimiert und so die Leistungsdichte erhöht werden.

Basierend darauf weist die erfindungsgemäße Strahlteileranordnung zunächst wenigstens einen Eingang zum Einkoppeln eines ersten Sendelichtstrahls mit ersten Sendelichtpulsen in die Strahlteileranordnung sowie eine Vielzahl von Ausgängen zum Auskoppeln von zweiten Sendelichtstrahlen mit zweiten Sendelichtpulsen aus der Strahlteileranordnung auf, wobei die Anzahl der Ausgänge größer als die Anzahl der Eingänge ist. Zum Aufteilen der ersten Sendelichtpulse auf die Ausgänge weist die Strahlteileranordnung wenigstens einen Strahlteiler mit einem Strahlteilereingang und einer Vielzahl von Strahlteilerausgängen auf. Den Strahlteilerausgängen von wenigstens einem Strahlteiler ist jeweils eine optische Kompressionsstrecke nachgeordnet. Die optischen Kompressionsstrecken komprimieren die zweiten Sendelichtpulse derart, dass eine Pulslänge der zweiten Sendlichtpulse kürzer ist als eine Pulslänge der eingekoppelten, ersten Sendlichtpulse.

Die optischen Kompressionsstrecken können bevorzugt als resonante, strukturierte Wellenleiter ausgeführt sein. Durch geeignete Abstimmung der Strukturgrößen auf die Wellenlänge des Sendelichts kann die Dispersion im Wellenleiter kontrolliert eingestellt werden. Hierdurch kann die Gruppengeschwindigkeitsdispersion insbesondere in Resonanznähe deutlich gesteigert werden, womit die zur Pulskompression benötigte Länge der optischen Kompressionsstrecken im cmbeziehungswiese mm-Bereich liegt. Damit können die optischen Kompressionsstrecken gemeinsam mit den Stahlteilern als integrierter optischer Schaltkreis ausgeführt werden.

Die Strukturierung der Wellenleiter der optischen Kompressionsstrecke kann bevorzugt periodisch sein und besonders bevorzugt charakteristische Perioden beziehungsweise Abstände im sub-Wellenlängenbereich aufweisen. Dadurch werden Streuverluste, also das Ankoppeln der Wellenleitermode an Strahlungsmoden außerhalb des Wellenleiters, unterdrückt. Bei Verwendung rein dielektrischer Materialien kann damit die Ausbreitung im Wellenleiter nahezu verlustfrei erfolgen.

Die resonanten, strukturierten Wellenleiter können beispielsweise als Slow-Light-Photonic-Crystal Wellenleiter, als sogenannte Meta-Waveguides mit Strukturen im sub-Wellenlängenbereich oder auch als Kombination dieser Wellenleitertypen ausgeführt sein.

Zur Aufteilung des eingekoppelten Sendelichtstrahls auf eine Vielzahl von Ausgängen der Strahlteileranordnung können mehrere Strahlteiler in mehreren Ebenen kaskadiert angeordnet werden, wobei jeweils die Ausgänge eines Strahlteilers mit den Eingängen von nachfolgenden Strahlteilern verbunden werden können. Bei der Verwendung von Strahlteilern, die einen Eingangsstrahl auf zwei Ausgangsstrahlen aufteilen, erhält man somit bei n Ebenen 2ⁿ Ausgänge. Jede Ebene kann optische Kompressionsstrecken aufweisen, die den Ausgängen der Strahlteiler der jeweiligen Ebene nachgeordnet sind. In einer bevorzugten Ausführungsform weist lediglich die letzte Ebene optische Kompressionsstrecken auf, die den Ausgängen der Strahlteiler der letzten Ebene nachgeordnet sind. Die Strahlteileranordnung kann bevorzugt als integrierter optischer Schaltkreis ausgeführt sein.

In einer Ausführungsform der Erfindung kann dem Eingang der Strahlteileranordnung wenigstens eine optische Aufweitungsstrecke zur Verbreiterung der ersten Sendelichtpulse vorgeordnet sein. Dadurch können von einer Lichtquelle emittierte Sendelichtpulse, deren Leistungsdichte zu hoch für eine Einkopplung in die Strahlteileranordnung ist, zunächst verbreitert werden.

Zur Pulsverbreiterung weist die optische Aufweitungsstrecke wenigstens eine optische Faser und/oder ein optisches Gitter und/oder ein Prisma auf. Derartige optische Aufweitungsstrecken sind beispielsweise aus der Kurzpulslasertechnik bekannt. Die Gruppengeschwindigkeitsdispersion der optischen Aufweitungsstrecke kann positiv oder negativ sein, typische Faktoren für Pulsverbreiterungen liegen im Bereich von 10 bis 100, womit sich auch die Leistungsamplitude um einen Faktor 10 bis 100 vermindert. Die optischen Kompressionsstrecken in der Strahlteileranordnung weisen zur Pulskompression eine der Gruppengeschwindigkeitsdispersion der optischen Aufweitungsstrecke entgegengesetzte Gruppengeschwindigkeitsdispersion auf, so dass in der Strahlteileranordnung oder an deren Ende wieder eine Kompression der verbreiterten Pulse erfolgt.

Die Verbreiterung der Sendelichtpulse kann auch in der Lichtquelle erfolgen, beispielsweise durch Verwendung sogenannter gechirpter Halbleiterlaser, oder Faserlaser, die eine optische Faser zur Pulsverbreiterung aufweisen. Derartige Laserquellen emittieren bereits gechirpte, also verbreiterte Laserpulse, so dass auf eine der Strahlteileranordnung vorgeordnete optische Aufweitungsstrecke verzichtet werden kann. Die Gruppengeschwindigkeitsdispersion der optischen Kompressionsstrecken in der Strahlteileranordnung ist dann auf die Pulsbreiten und den Chirp der emittierten Sendelichtpulse abgestimmt, so dass die optischen Kompressionsstrecken die Sendelichtpulse nach einer Strahlteilung wieder komprimieren können.

Den Ausgängen der Strahlteileranordnung können phasenschiebende Elemente zur Beeinflussung einer Phasenverschiebung der Sendelichtpulse beziehungsweise der Sendelichtstrahlen zueinander nachgeordnet sein. Die Strahlteileranordnung bildet dann mit den phasenschiebenden Elementen ein Optical Phased Array, mit dem in bekannter Weise eine Ausbreitungsrichtung einer durch Überlagerung der Sendelichtstrahlen erzeugten Wellenfront kontrolliert werden und somit eine Abtastung eines Überwachungsbereichs erfolgen kann. Eine Kontrolleinheit steuert dabei die phasenschiebenden Elemente derart an, dass diese den Sendelichtstrahlen, die für eine gewünschte Ausbreitungsrichtung der Wellenfront benötigte Phasenverschiebung aufprägen.

Die phasenschiebenden Elemente sind bevorzugt als integrierter optischer Schaltkreis ausgeführt. Besonders bevorzugt sind Strahlteiler, Kompressionsstrecken und phasenschiebende Elemente in einem integrierten optischen Schaltkreis zusammengefasst.

In der Strahlteileranordnung oder der Strahlteileranordnung nachgeordnet können aus dem Stand der Technik grundsätzlich bekannte, sogenannte Semiconductor Optical Amplifier (SOA) angeordnet sein. Damit ist eine weitere Nachverstärkung der Lichtleistung der aufgeteilten Sendelichtpulse möglich.

Die erfindungsgemäße Strahlteileranordnung kann bevorzugt in einem optoelektronischen Sensor zur Erfassung von Objekten in einem Überwachungsbereich verwendet werden. Ein derartiger Sensor umfasst wenigstens eine Lichtquelle zum Aussenden von ersten Sendelichtstrahlen mit ersten Sendelichtpulsen sowie eine der Lichtquelle nachgeordnete erfindungsgemäße Strahlteileranordnung. Eine Sendeoptik projiziert die zweiten Sendelichtstrahlen in den Überwachungsbereich. Ein Lichtempfänger mit vorgeordneter Empfangsoptik erzeugt Empfangssignale aus den an Objekten im Überwachungsbereich remittierten Lichtstrahlen und eine Steuer- und Auswertungseinheit ist dazu ausgebildet, unter Verwendung einer Lichtlaufzeit zwischen Aussenden der Sendelichtstrahlen und Empfangen der remittierten Lichtstrahlen einen Abstand des Objekts zu bestimmen.

Zur Detektion der von Objekten aus dem Überwachungsbereich remittierten Lichtstrahlen kann ein ortsauflösender Flächendetektor vorgesehen sein, bevorzugt eine Matrix aus Photodioden oder APDs (Avalanche Photo Diode), oder auch ein Bildsensor mit entsprechend zugeordneten Einzelpixeln oder Pixelgruppen. Eine weitere denkbare Ausführungsform sieht einen SPAD-Empfänger (Single-Photon Avalanche Diode) mit einer Vielzahl von SPADs vor.

Die Steuer- und Auswertungseinheit kann mit der Lichtquelle, der Strahlteileranordnung und dem Detektor verbunden sein und ist bevorzugt dafür ausgebildet, insbesondere mit einem bekannten Phasen- oder Pulsverfahren die Lichtlaufzeit zwischen Aussenden der Lichtstrahlen und Empfangen der remittierten Lichtstrahlen zu messen und damit einen Abstand eines Objekts im Überwachungsbereich zu bestimmen. Der Sensor wird dadurch entfernungsmessend. Alternativ kann lediglich die Anwesenheit eines Objekts festgestellt und beispielsweise als Schaltsignal ausgegeben werden.

Die Ausgänge der Strahlteileranordnung können zweidimensional in einer Matrix angeordnet sein. Somit lässt sich ein zweidimensionaler Überwachungsbereich abtasten.

Die Ansteuerung der phasenschiebenden Elemente in der Strahlteileranordnung durch die Kontrolleinheit kann in Abhängigkeit von Auswertungsergebnissen der Steuer- und Auswertungseinheit erfolgen. Detektiert die Steuer- und Auswertungseinheit beispielsweise ein Objekt im Überwachungsbereich, kann die Steuer- und Auswertungseinheit die phasenschiebenden Elemente über die Kontrolleinheit beispielsweise derart ansteuern, dass eine Umgebung des detektierten Objekts mit erhöhter Auflösung abgetastet wird.

Zur Unterdrückung von Stör- oder Fremdlicht kann der Detektor mit der Abtastung des Überwachungsbereichs synchronisiert sein. So können beispielsweise nur die Empfänger- oder Pixelgruppen des Detektors aktiviert werden, die aus den von den abgetasteten Bereichen des Überwachungsbereichs remittiertes Licht empfangen.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Darstellung einer Ausführungsform der Erfindung
- Fig. 2: eine schematische Darstellung einer alternativen Ausführungsform der Erfindung
- Fig. 3: eine schematische Darstellung einer Ausführungsform der Erfindung mit einer Strahlteileranordnung mit kaskadiert angeordneten Strahlteilern
- Fig. 4: eine schematische Darstellung einer Ausführungsform der Erfindung mit einer als Optical Phased Array ausgebildeten Strahlteileranordnung
- Fig. 5: eine schematische Darstellung eines optoelektronischen Sensors mit einer erfindungsgemäßen Strahlteileranordnung.

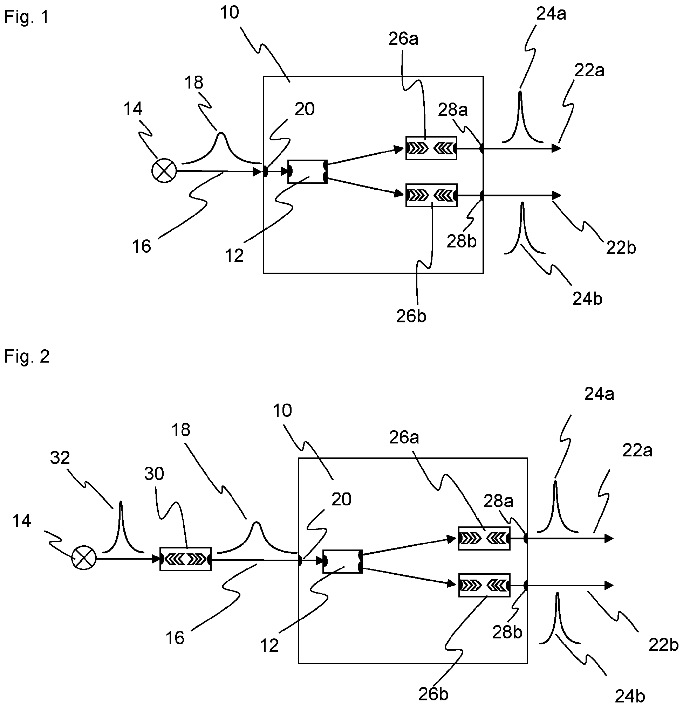

Figur 1 zeigt eine, eine schematische Darstellung einer Ausführungsform der Erfindung mit einer Strahlteileranordnung 10, wobei die Strahlteileranordnung 10 der Übersichtlichkeit halber nur einen Strahlteiler 12 aufweist. Eine Lichtquelle 14 emittiert Sendelicht, das als erster Sendelichtstrahl 16 mit ersten Sendelichtpulsen 18, die eine erste Pulslänge aufweisen, in einen Eingang 20 der Strahlteileranordnung 10 eingekoppelt wird. Der Strahlteiler 12 teilt den ersten Sendelichtstrahl 16 auf zwei zweite Sendelichtstrahlen 22a, 22b mit zweiten Sendelichtpulsen 24a, 24b auf. Dem Strahlteiler 12 sind zwei optische Kompressionsstrecken 26a, 26b nachgeordnet, die die zweiten Sendelichtpulse 24a, 24b derart komprimieren, dass eine Pulslänge der zweiten Sendelichtpulse 24a, 24b kürzer ist als die Pulslänge der ersten Sendlichtpulse 18. Über die Ausgänge 28a, 28b der Strahlteileranordnung 10 können die zweiten Sendelichtstrahlen 22a, 22b aus der Strahlteileranordnung 10 ausgekoppelt werden.

Figur 2 zeigt eine schematische Darstellung einer alternativen Ausführungsform der Erfindung. Im Unterschied zu der in Figur 1 gezeigten Ausführungsform ist dem Eingang 20 der Strahlteileranordnung 10 eine optische Aufweitungsstrecke 28 vorgeordnet. Die von der Lichtquelle 14 emittierten Sendelichtpulse 30 können aufgrund zu hoher Leistungsdichte nicht in die Strahlteileranordnung 10 eingekoppelt werden. Durch die optische Aufweitungsstrecke 30 werden die von der Lichtquelle 12 emittierten Sendelichtpulse 32 verbreitert, womit ihre Leistungsdichte verringert wird. Die derart verbreiterten Sendelichtpulse können dann als erste Sendelichtpulse 18 in den Eingang 20 der Strahlteileranordnung 10 eingekoppelt werden und wie in der in Figur 1 gezeigten Ausführungsform nach Strahlteilung zur Erhöhung der Leistungsdichte wieder komprimiert werden.

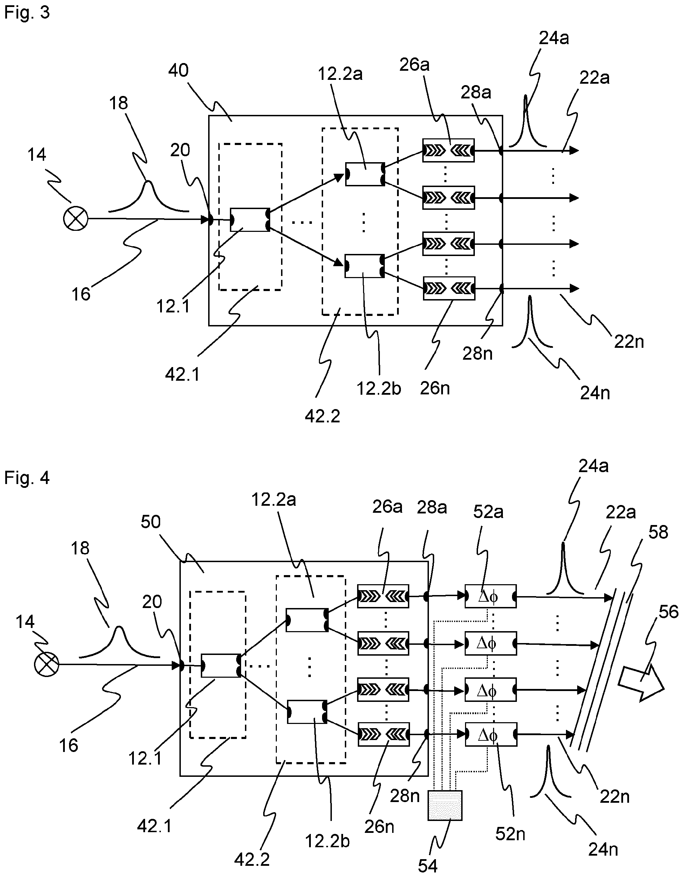

Figur 3 zeigt eine schematische Darstellung einer Ausführungsform der Erfindung mit einer Strahlteileranordnung 40 mit kaskadiert angeordneten Strahlteilern. Die Strahlteileranordnung 40 weist dabei 2 Ebenen 42.1, 42.2 mit Strahlteilern 12.1, 12.2a, 12.2b auf, die jeweils einen Eingangsstrahl auf zwei Ausgangsstrahlen aufteilen. Die Strahlteileranordnung 40 erzeugt somit 4 zweite Sendelichtstrahlen 22a, 22n. Wie in den oben dargestellten Ausführungsformen wird ein erster Sendelichtstrahl 16 mit ersten Sendelichtpulsen 18, die eine erste Pulslänge aufweisen, in einen Eingang 20 der Strahlteileranordnung 40 eingekoppelt. Auf der ersten Ebene 42.1 der Strahlteileranordnung 40 teilt ein Strahlteiler 12.1 den ersten Sendelichtstrahl 16 auf zwei Sendelichtstrahlen, die auf der zweiten Ebene 42.2 durch zwei weitere Strahlteiler 12.2a, 12.2b auf vier zweite Sendelichtstrahlen 22a, 22n mit zweiten Sendelichtpulsen 24a, 24n aufgeteilt werden. Den Strahlteilern 12.2a, 12.2b der zweiten Ebene 42.2, sind vier optische Kompressionsstrecken 26a, 26n nachgeordnet, die die zweiten Sendelichtpulse 24a, 24n der zweiten Sendelichtstrahlen 22a, 22n derart komprimieren, dass eine Pulslänge der zweiten Sendelichtpulse 24a, 24n kürzer ist als die Pulslänge der ersten Sendlichtpulse 18.

Über die Ausgänge 28a, 28n der Strahlteileranordnung 40 können die zweiten Sendelichtstrahlen 22a, 22n aus der Strahlteileranordnung 40 ausgekoppelt werden.

Zur Komprimierung der Sendelichtpulse können innerhalb der Strahlteileranordnung auch zwischen den Ebenen 42.1, 42.2 optische Kompressionsstrecken angeordnet sein, so dass eine sukzessive Pulskompression bis zum Ausgang der Strahlteileranordnung erfolgt.

Die Beschränkung auf 2 Ebenen in der Darstellung dieser Ausführungsform ist rein beispielhaft zu verstehen. Wie durch die Punkte zwischen den Ebenen 42.1, 42.2, den Strahlteilern 12.2a, 12.2b, den optischen Kompressionsstrecken 26a, 26n und den zweiten Sendelichtstrahlen 22a, 22n angedeutet, kann die Strahlteileranordnung auch mehr als zwei Ebenen aufweisen und entsprechend mehr Sendelichtstrahlen erzeugen. Für einen optoelektronischen Sensor zur Objekterfassung kann eine Strahlteileranordnung typischerweise 16-512 Ausgänge aufweisen.

Figur 4 zeigt eine schematische Darstellung einer weiteren Ausführungsform der Erfindung, wobei in Weiterbildung der in Figur 3 gezeigten Ausführungsform den Ausgängen 28a, 28n der Strahlteileranordnung 50 phasenschiebende Elemente 52a, 52n nachgeordnet sind. Die phasenschiebenden Elemente 52a, 52n werden über eine Kontrolleinheit 54 angesteuert und sind dazu eingerichtet, Phasenverschiebungen der Sendelichtstrahlen 22a, 22n zueinander zu beeinflussen. Damit bildet die Strahlteileranordnung 50 gemeinsam mit den phasenschiebenden Elementen 52a, 52n ein Optical Phased Array, mit dem in bekannter Weise eine Ausbreitungsrichtung 56 einer durch Überlagerung der Sendelichtstrahlen 22a, 22n erzeugten Wellenfront 58 kontrolliert werden kann.

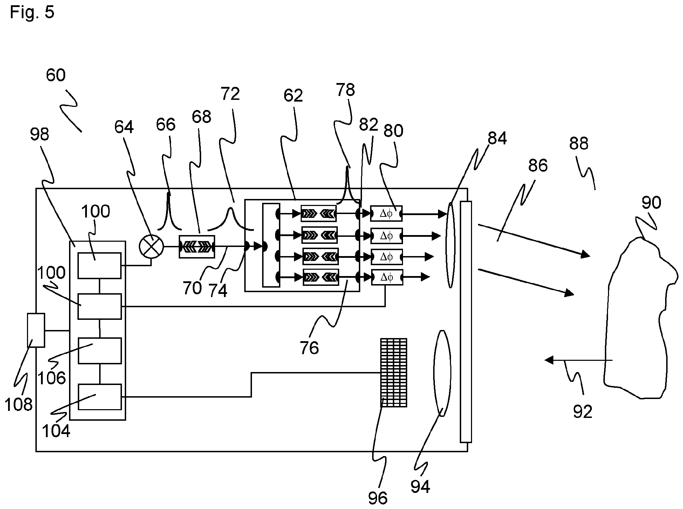

Figur 5 zeigt eine schematische Darstellung eines optoelektronischen Sensors 60 mit einer erfindungsgemäßen Strahlteileranordnung 62. Der Sensor 60 weist eine Lichtquelle 64 auf, beispielsweise eine Laserdiode. Die Lichtquelle 64 emittiert Sendelichtpulse 66, die aufgrund zu hoher Leistungsdichte nicht direkt in die Strahlteileranordnung 62 eingekoppelt werden können. Der Sensor 60 umfasst daher eine optische Aufweitungsstrecke 68, in der die von der Lichtquelle 64 emittierten Sendelichtpulse 66 verbreitert werden, womit ihre Leistungsdichte verringert wird. Die derart verbreiterten Sendelichtpulse können dann als erste Sendelichtstrahlen 70 mit ersten Sendelichtpulsen 72 in den Eingang 74 der Strahlteileranordnung 62 eingekoppelt werden. In der Strahlteileranordnung 62 werden die ersten Sendelichtstrahlen 70 wie in den oben beschriebenen Ausführungsformen auf eine Vielzahl von zweiten Sendelichtstrahlen 76 mit komprimierten zweiten Sendelichtpulsen 78 aufgeteilt. Den Ausgängen 82 der Strahlteileranordnung 62 sind phasenschiebende Elemente 80 zur Beeinflussung der Phasenverschiebung der zweiten Sendelichtstrahlen 76 zueinander nachgeordnet. Die zweiten Sendelichtstrahlen 76 können mit einer Sendeoptik 84 als Sendelicht 86 in einen Überwachungsbereich 88 projiziert werden. Das von einem Objekt 90 im Überwachungsbereich 88 remittierte Sendelicht wird als Empfangslicht 92 über eine Empfangsoptik 94 auf einen Lichtempfänger 96 geleitet.

Der Lichtempfänger 96 ist als Matrix aus einer Vielzahl von Lichtempfangselementen ausgebildet, bevorzugt als Matrix aus Photodioden, APDs (Avalanche Photo Diode), oder SPAD-Empfängern (Single-Photon Avalanche Diode) oder auch als Bildsensor mit entsprechend zugeordneten Einzelpixeln oder Pixelgruppen.

In dem Sensor 60 ist weiterhin eine Steuer- und Auswertungseinheit 98 vorgesehen, die mit der Lichtquelle 64, der Strahlteileranordnung 62 und dem Lichtempfänger 96 verbunden ist. Die Steuer- und Auswerteeinheit 98 umfasst eine Lichtquellensteuerung 100, eine Kontrolleinheit 102 für die phasenschiebenden Elemente 80, eine Lichtlaufzeitmesseinheit 104, und eine Objektentfernungsschätzeinheit 106, wobei dies zunächst nur funktionale Blöcke sind, die auch in gleicher Hardware oder in anderen funktionalen Einheiten wie in der Lichtquelle 64, in der Strahlteileranordnung 62 oder im Lichtempfänger 96 implementiert sein können. Über eine Schnittstelle 108 kann die Steuer- und Auswertungseinheit 98 Messdaten ausgeben beziehungsweise umgekehrt Steuer- und Parametrieranweisungen entgegennehmen. Die Steuer- und Auswertungseinheit 98 kann auch in Form von lokalen Auswertungsstrukturen auf einem Chip des Lichtempfängers 96 angeordnet sein oder als Teilimplementierung mit den Funktionen einer zentralen Auswertungseinheit (nicht gezeigt) zusammenwirken.

## Patentansprüche

1. Strahlteileranordnung (10, 40, 50, 62) für einen optoelektronischen Sensor (60), die wenigstens einen Eingang (20, 74) zum Einkoppeln von ersten Sendelichtstrahlen (16, 70) mit ersten Sendelichtpulsen (18, 72) in die Strahlteileranordnung (10, 40, 50, 62), wenigstens einen Strahlteiler (12, 12.1, 12.2a, 12.2b) zum Aufteilen der ersten Sendelichtstrahlen (16, 70) in eine Vielzahl von zweiten Sendelichtstrahlen (22a, 22b, 22n, 76) mit zweiten Sendelichtpulsen (24a, 24b, 24n, 78) sowie eine Vielzahl von Ausgängen (28a, 28b, 28n, 82) zum Auskoppeln der zweiten Sendelichtstrahlen (22a, 22b, 22n, 76) aus der Strahlteileranordnung (10, 40, 50, 62) aufweist, wobei die Anzahl der Ausgänge (28a, 28b, 28n, 82) größer als die Anzahl der Eingänge (20, 74) ist, **dadurch gekennzeichnet,**
**dass** wenigstens einem Strahlteiler (12, 12.1, 12.2a, 12.2b) optische Kompressionsstrecken (26a, 26b, 26n) nachgeordnet sind, welche die zweiten Sendelichtpulse (24a, 24b, 24n, 78) derart komprimieren, dass eine zweite Pulslänge der zweiten Sendlichtpulse (24a, 24b, 24n, 78) kürzer ist als eine erste Pulslänge der ersten Sendlichtpulse (18, 72).

2. Strahlteileranordnung (10, 40, 50, 62) nach Anspruch 1, **dadurch gekennzeichnet, dass** die optischen Kompressionsstrecken (26a, 26b, 26n) als resonante, strukturierte Wellenleiter ausgeführt sind.

3. Strahlteileranordnung (10, 40, 50, 62) nach Anspruch 2, **dadurch gekennzeichnet, dass** die resonanten, strukturierten Wellenleiter Slow-Light-Photonic-Crystal Wellenleiter sind.

4. Strahlteileranordnung (10, 40, 50, 62) nach einem der vorhergehenden Ansprüche, **dadurch gekennzeichnet, dass** die Strahlteileranordnung (10, 40, 50, 62) eine Vielzahl kaskadiert angeordneter Strahlteiler (12, 12.1, 12.2a, 12.2b) aufweist.

5. Strahlteileranordnung (10, 40, 50, 62) nach einem der vorhergehenden Ansprüche, **dadurch gekennzeichnet, dass** die optischen Kompressionsstrecken (26a, 26b, 26n) und die Strahlteiler (12, 12.1, 12.2a, 12.2b) in einem integrierten optischen Schaltkreis zusammengefasst sind.

6. Strahlteileranordnung (10, 62) nach einem der vorhergehenden Ansprüche, **dadurch gekennzeichnet, dass** dem wenigstens einen Eingang (20) der Strahlteileranordnung (10, 62) wenigstens eine optische Aufweitungsstrecke (30, 68) zur Verbreiterung von von einer Lichtquelle (14, 64) emittierten Sendelichtpulsen (32, 66) vorgeordnet ist.

7. Strahlteileranordnung (10, 62) nach Anspruch 6, **dadurch gekennzeichnet, dass** die wenigstens eine optische Aufweitungsstrecke (30, 68) als optische Faser und/oder optisches Gitter und/oder Prisma ausgeführt ist.

8. Strahlteileranordnung (50, 62) nach einem der vorhergehenden Ansprüche, **dadurch gekennzeichnet, dass** den Ausgängen (28a, 28n, 82) der Strahlteileranordnung (50, 62) phasenschiebende Elemente (52a, 52n, 80) zur Beeinflussung von Phasenverschiebungen der zweiten Sendelichtstrahlen (22a, 22n, 76) zueinander nachgeordnet sind.

9. Strahlteileranordnung (50, 62) nach Anspruch 8, **dadurch gekennzeichnet, dass** die Strahlteiler (12.1, 12.2a, 12.2b), Kompressionsstrecken (26a, 26n) und phasenschiebende Elemente (52a, 52n, 80) in einem integrierten optischen Schaltkreis zusammengefasst sind.

10. Strahlteileranordnung (10, 40, 50, 62) nach einem der vorhergehenden Ansprüche, **dadurch gekennzeichnet, dass** wenigstens einem Strahlteiler (12.1, 12.2a, 12.2b) Semiconductor Optical Amplifier zur Nachverstärkung einer Lichtleistung der zweiten Sendelichtpulse (24a, 24b, 24n, 78) nachgeordnet sind.

11. Optoelektronischer Sensor (60) zur Erfassung eines Objekts (90) in einem Überwachungsbereich (88) mit wenigstens einer Lichtquelle (64) zum Aussenden von Sendelichtstrahlen mit Sendelichtpulsen (66), einer der Lichtquelle (64) nachgeordneten Strahlteileranordnung (62) zum Aufteilen der Sendelichtstrahlen in eine Vielzahl von zweiten Sendelichtstrahlen (76), einer Sendeoptik (84) zum Projizieren der zweiten Sendelichtstrahlen (76) als Sendelicht (86) in den Überwachungsbereich (88), einem Lichtempfänger (96) mit vorgeordneter Empfangsoptik (94) zum Erzeugen von Empfangssignalen aus an dem Objekt remittierten Lichtstrahlen (92) und einer Steuer- und Auswertungseinheit (98) zur Gewinnung von Informationen über das Objekt (90) aus den Empfangssignalen, **dadurch gekennzeichnet,**
**dass** die Strahlteileranordnung (62) gemäß einem der vorhergehenden Ansprüche ausgeführt ist.

12. Optoelektronischer Sensor nach Anspruch 11, **dadurch gekennzeichnet, dass** die Steuer- und Auswertungseinheit dafür ausgebildet ist, aus einer Lichtlaufzeit zwischen Aussenden des Sendelichts (86) und Empfangen der vom Objekt (90) remittierten Lichtstrahlen (92) einen Abstand des Objekts (90) zum Sensor (60) zu bestimmen.

13. Verfahren zur Aufteilung von Sendelichtstrahlen in einem optoelektronischen Sensor (60), das die folgenden Schritte umfasst:
- Einkoppeln von ersten Sendelichtstrahlen (16, 70) mit ersten Sendelichtpulsen in eine Strahlteileranordnung (10, 40, 50, 62);
- Aufteilen der ersten Sendelichtstrahlen in eine Vielzahl von zweiten Sendelichtstrahlen (22a, 22b, 22n, 76) mit zweiten Sendelichtpulsen (24a, 24b, 24n, 78), wobei die Anzahl der zweiten Sendelichtstrahlen (22a, 22b, 22n, 76) größer als die Anzahl der ersten Sendelichtstrahlen (16, 70) ist, **gekennzeichnet durch** den weiteren Schritt:
- Komprimieren der zweiten Sendelichtpulse derart, dass eine zweite Pulslänge der zweiten Sendlichtpulse (24a, 24b, 24n, 78) kürzer ist als eine erste Pulslänge der ersten Sendlichtpulse (18, 72).

14. Verfahren nach Anspruch 13 **gekennzeichnet durch** den weiteren Schritt:
- Beeinflussen einer Phasenverschiebung der zweiten Sendelichtstrahlen (22a, 22b, 22n, 76) zueinander.

## Claims

1. Beam splitter arrangement (10, 40, 50, 62) for an optoelectronic sensor (60), which has at least one input (20, 74) for coupling first transmitted light beams (16, 70) with first transmitted light pulses (18, 72) into the beam splitter arrangement (10, 40, 50, 62), at least one beam splitter (12, 12.1, 12.2a, 12. 2b) for splitting the first transmitted light beams (16, 70) into a plurality of second transmitted light beams (22a, 22b, 22n, 76) with second transmitted light pulses (24a, 24b, 24n, 78), and a plurality of outputs (28a, 28b, 28n, 82) for coupling out the second transmitted light beams (22a, 22b, 22n, 76) from the beam splitter arrangement (10, 40, 50, 62), the number of outputs (28a, 28b, 28n, 82) being greater than the number of inputs (20, 74),
**characterized in that**
optical compression paths (26a, 26b, 26n) are arranged downstream of at least one beam splitter (12, 12.1, 12.2a, 12.2b), which compression paths compress the second transmitted light pulses (24a, 24b, 24n, 78) in such a way that a second pulse length of the second transmitted light pulses (24a, 24b, 24n, 78) is shorter than a first pulse length of the first transmitted light pulses (18, 72).

2. Beam splitter arrangement (10, 40, 50, 62) according to claim 1, **characterized in that** the optical compression paths (26a, 26b, 26n) are designed as resonant, structured waveguides.

3. Beam splitter arrangement (10, 40, 50, 62) according to claim 2, **characterized in that** the resonant, structured waveguides are slow-light photonic-crystal waveguides.

4. Beam splitter arrangement (10, 40, 50, 62) according to any one of the preceding claims, **characterized in that** the beam splitter arrangement (10, 40, 50, 62) has a plurality of beam splitters (12, 12.1, 12.2a, 12.2b) arranged in cascade.

5. Beam splitter arrangement (10, 40, 50, 62) according to one of the preceding claims, **characterized in that** the optical compression paths (26a, 26b, 26n) and the Beam splitters (12, 12.1, 12.2a, 12.2b) are combined in an integrated optical circuit.

6. Beam splitter arrangement (10, 62) according to one of the preceding claims, **characterized in that** at least one optical stretching path (30, 68) for stretching transmitted light pulses (32, 66) emitted by a light source (14, 64) is arranged upstream of the at least one input (20) of the beam splitter arrangement (10, 62).

7. Beam splitter arrangement (10, 62) according to claim 6, **characterized in that** the at least one optical stretching path (30, 68) is designed as an optical fiber and/or optical grating and/or prism.

8. Beam splitter arrangement (50, 62) according to one of the preceding claims, **characterized in that** phase-shifting elements (52a, 52n, 80) for influencing phase shifts of the second transmitted light beams (22a, 22n, 76) with respect to one another are arranged downstream of the outputs (28a, 28n, 82) of the beam splitter arrangement (50, 62).

9. Beam splitter arrangement (50, 62) according to claim 8, **characterized in that** the beam splitters (12.1, 12.2a, 12.2b), compression paths (26a, 26n) and phase-shifting elements (52a, 52n, 80) are combined in an integrated optical circuit.

10. Beam splitter arrangement (10, 40, 50, 62) according to one of the preceding claims, **characterized in that** at least one beam splitter (12.1, 12.2a, 12.2b) is followed by semiconductor optical amplifiers for post-amplification of a light power of the second transmitted light pulses (24a, 24b, 24n, 78).

11. Optoelectronic sensor (60) for detecting an object (90) in a monitoring area (88), having at least one light source (64) for emitting transmitted light beams with transmitted light pulses (66), a beam splitter arrangement (62), arranged downstream of the light source (64), for splitting the transmitted light beams into a multiplicity of second transmitted light beams (76), a transmitting optical system (84) for projecting the second transmitted light beams (76) as transmitted light (86) into the monitored area (88), a light receiver (96) with receiving optical system (94) arranged upstream for generating received signals from light beams (92) remitted by the object, and a control and evaluation unit (98) for obtaining information about the object (90) from the received signals
**characterized in that**
the beam splitter arrangement (62) is implemented according to one of the preceding claims.

12. Optoelectronic sensor according to claim 11, **characterized in that** the control and evaluation unit is designed to determine a distance of the object (90) to the sensor (60) from a light transit time between emitting the transmitted light (86) and receiving the light beams (92) remitted by the object (90).

13. Method of splitting transmitted light beams in an optoelectronic sensor (60), comprising the steps of:
- Coupling first transmitted light beams (16, 70) with first transmitted light pulses into a beam splitter arrangement (10, 40, 50, 62);
- splitting the first transmitted light beams into a plurality of second transmitted light beams (22a, 22b, 22n, 76) with second transmitted light pulses (24a, 24b, 24n, 78), the number of second transmitted light beams (22a, 22b, 22n, 76) being greater than the number of first transmitted light beams (16, 70), **characterized by** the further step of:
- Compressing the second transmitted light pulses such that a second pulse length of the second transmitted light pulses (24a, 24b, 24n, 78) is shorter than a first pulse length of the first transmitted light pulses (18, 72).

14. Method according to claim 13 **characterized by** the further step:
- Affecting a phase shift of the second transmitted light beams (22a, 22b, 22n, 76) with respect to each other.

## Revendications

1. Dispositif diviseur de faisceau (10, 40, 50, 62) pour un capteur optoélectronique (60), comprenant au moins une entrée (20, 74) pour injecter des premiers faisceaux lumineux d'émission (16, 70) avec des premières impulsions lumineuses d'émission (18, 72) dans le dispositif diviseur de faisceau (10, 40, 50, 62), au moins un diviseur de faisceau (12, 12.1, 12.2a, 12.2b) pour diviser les premiers faisceaux lumineux d'émission (16, 70) en une pluralité de seconds faisceaux lumineux d'émission (22a, 22b, 22n, 76) avec des secondes impulsions lumineuses d'émission (24a, 24b, 24n, 78), ainsi qu'une pluralité de sorties (28a, 28b, 28n, 82) pour extraire les seconds faisceaux lumineux d'émission (22a, 22b, 22n, 76) du dispositif diviseur de faisceau (10, 40, 50, 62), le nombre de sorties (28a, 28b, 28n, 82) étant supérieur au nombre d'entrées (20, 74),
**caractérisé en ce que**
des sections de compression optiques (26a, 26b, 26n) sont disposées en aval d'au moins un diviseur de faisceau (12, 12.1, 12.2a, 12.2b), qui compriment les secondes impulsions lumineuses d'émission (24a, 24b, 24n, 78) de telle sorte qu'une seconde longueur d'impulsion des secondes impulsions lumineuses d'émission (24a, 24b, 24n, 78) est plus courte qu'une première longueur d'impulsion des premières impulsions lumineuses d'émission (18, 72).

2. Dispositif diviseur de faisceau (10, 40, 50, 62) selon la revendication 1, **caractérisé en ce que** les sections de compression optiques (26a, 26b, 26n) sont réalisées sous forme de guides d'ondes structurés résonants.

3. Dispositif diviseur de faisceau (10, 40, 50, 62) selon la revendication 2, **caractérisé en ce que** les guides d'ondes structurés résonants sont des guides d'ondes à cristaux photoniques à lumière lente.

4. Dispositif diviseur de faisceau (10, 40, 50, 62) selon l'une des revendications précédentes, **caractérisé en ce que** le dispositif diviseur de faisceau (10, 40, 50, 62) comprend une pluralité de diviseurs de faisceau (12, 12.1, 12.2a, 12.2b) disposés en cascade.

5. Dispositif diviseur de faisceau (10, 40, 50, 62) selon l'une des revendications précédentes, **caractérisé en ce que** les sections de compression optiques (26a, 26b, 26n) et les diviseurs de faisceau (12, 12.1, 12.2a, 12.2b) sont réunis dans un circuit intégré optique.

6. Dispositif diviseur de faisceau (10, 62) selon l'une des revendications précédentes, **caractérisé en ce que** au moins une section d'élargissement optique (30, 68) est disposée en amont de ladite au moins une entrée (20) du dispositif diviseur de faisceau (10, 62) pour élargir les impulsions lumineuses d'émission (32, 66) émises par une source lumineuse (14, 64).

7. Dispositif diviseur de faisceau (10, 62) selon la revendication 6, **caractérisé en ce que** ladite au moins une section d'élargissement optique (30, 68) est réalisée sous forme de fibre optique et/ou de réseau optique et/ou de prisme.

8. Dispositif diviseur de faisceau (50, 62) selon l'une des revendications précédentes, **caractérisé en ce que** des éléments de déphasage (52a, 52n, 80) sont disposés en aval des sorties (28a, 28n, 82) du dispositif diviseur de faisceau (50, 62) pour influencer les déphasages des seconds faisceaux lumineux d'émission (22a, 22n, 76) les uns par rapport aux autres.

9. Dispositif diviseur de faisceau (50, 62) selon la revendication 8, **caractérisé en ce que** les diviseurs de faisceau (12.1, 12.2a, 12.2b), les sections de compression (26a, 26n) et les éléments de déphasage (52a, 52n, 80) sont réunis dans un circuit intégré optique.

10. Dispositif diviseur de faisceau (10, 40, 50, 62) selon l'une des revendications précédentes, **caractérisé en ce que** des amplificateurs optiques à semi-conducteurs sont disposés en aval dudit au moins un diviseur de faisceau (12.1, 12.2a, 12.2b) pour la post-amplification d'une puissance lumineuse des secondes impulsions lumineuses d'émission (24a, 24b, 24n, 78).

11. Capteur optoélectronique (60) pour détecter un objet (90) dans une zone à surveiller (88), comprenant au moins une source lumineuse (64) pour émettre des faisceaux lumineux d'émission avec des impulsions lumineuses d'émission (66), un dispositif diviseur de faisceau (62) disposé en aval de la source lumineuse (64) pour diviser les faisceaux lumineux d'émission en une pluralité de seconds faisceaux lumineux d'émission (76), une optique d'émission (84) pour projeter les seconds faisceaux lumineux d'émission (76) sous forme de lumière d'émission (86) dans la zone à surveiller (88), un récepteur de lumière (96) avec une optique de réception (94) disposée en amont pour générer des signaux de réception à partir de faisceaux lumineux (92) renvoyés par l'objet, et une unité de commande et d'évaluation (98) pour obtenir des informations sur l'objet (90) à partir des signaux de réception,
**caractérisé en ce que**
le dispositif diviseur de faisceau (62) est réalisé selon l'une des revendications précédentes.

12. Capteur optoélectronique selon la revendication 11, **caractérisé en ce que** l'unité de commande et d'évaluation est réalisée pour déterminer une distance de l'objet (90) par rapport au capteur (60) à partir d'un temps de propagation de la lumière entre l'émission de la lumière d'émission (86) et la réception des faisceaux lumineux (92) renvoyés par l'objet (90).

13. Procédé de division de faisceaux lumineux d'émission dans un capteur optoélectronique (60), comprenant les étapes suivantes consistant à :
- injecter des premiers faisceaux lumineux d'émission (16, 70) avec des premières impulsions lumineuses d'émission dans un dispositif diviseur de faisceau (10, 40, 50, 62) ;
- diviser les premiers faisceaux lumineux d'émission en une pluralité de seconds faisceaux lumineux d'émission (22a, 22b, 22n, 76) avec des secondes impulsions lumineuses d'émission (24a, 24b, 24n, 78), le nombre des seconds faisceaux lumineux d'émission (22a, 22b, 22n, 76) étant supérieur au nombre des premiers faisceaux lumineux d'émission (16, 70), **caractérisé par** l'étape supplémentaire consistant à :
- comprimer les secondes impulsions lumineuses d'émission de telle sorte qu'une seconde longueur d'impulsion des secondes impulsions lumineuses d'émission (24a, 24b, 24n, 78) soit plus courte qu'une première longueur d'impulsion des premières impulsions lumineuses d'émission (18, 72).

14. Procédé selon la revendication 13, **caractérisé par** l'étape supplémentaire consistant à :
- influencer un déphasage des seconds faisceaux lumineux d'émission (22a, 22b, 22n, 76) les uns par rapport aux autres.
